(19) Europäisches Patentamt
European Patent Office
Office européen des brevets

(11) EP 4 245 530 A1

(12) EUROPEAN PATENT APPLICATION

(43) Date of publication:
**20.09.2023 Bulletin 2023/38**

(21) Application number: **22162461.2**

(22) Date of filing: **16.03.2022**

(51) International Patent Classification (IPC):
***B32B 27/08*** *(2006.01)* ***B32B 27/30*** *(2006.01)*
***B32B 27/32*** *(2006.01)* ***C08J 5/18*** *(2006.01)*

(52) Cooperative Patent Classification (CPC):
**B32B 27/08; B32B 27/30; B32B 27/32; B32B 27/327;** B32B 2250/03; B32B 2250/24; B32B 2250/246; B32B 2270/00; B32B 2307/30; B32B 2307/31; B32B 2307/40; B32B 2307/408; B32B 2307/54; B32B 2307/546; B32B 2307/558;

(Cont.)

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(71) Applicant: **Borealis AG**
**1020 Vienna (AT)**

(72) Inventors:
- **WANG, Jingbo**
  **4021 Linz (AT)**
- **BERGER, Friedrich**
  **4021 Linz (AT)**
- **ALABRUNE, Arnaud**
  **92400 Courbevoie (FR)**
- **SEMAAN, Chantal**
  **08008 Barcelona (ES)**
- **BERTHELIER, Anthony**
  **92400 Courbevoie (FR)**

(74) Representative: **TBK**
**Bavariaring 4-6**
**80336 München (DE)**

# (54) MULTILAYERED FILM

(57) The present invention relates to a multilayered film comprising a skin layer (SKL), a core layer (CL) and a sealing layer (SL); wherein the sealing layer (SL) comprises (a) 15 to 85 wt.-% based on the total weight of the sealing layer (SL) of a specific metallocene-catalysed multimodal polyethylene copolymer (MMCP) and (b) 15 to 85 wt.-% based on the total weight of the sealing layer (SL) of a specific plastomer wherein components (a) and (b) add up to 100 wt.-%. The present invention furthermore relates to the use of said multilayered film as packing material, preferably for food and/or medical products.

EP 4 245 530 A1

(52) Cooperative Patent Classification (CPC): (Cont.)
B32B 2307/72; B32B 2439/70; B32B 2439/80

## Description

The present invention relates to a multilayered film comprising a skin layer (SKL), a core layer (CL) and a sealing layer (SL), wherein the sealing layer (SL) comprises (a) 15 to 85 wt.-% based on the total weight of the sealing layer (SL) of a specific metallocene-catalysed multimodal polyethylene copolymer (MMCP) and (b) 15 to 85 wt.-% based on the total weight of the sealing layer (SL) of a specific plastomer wherein components (a) and (b) add up to 100 wt.-%. The present invention furthermore relates to the use of said multilayered film as packing material, preferably for food and/or medical products.

Polyethylenes are widely used everywhere in daily life, like packaging, due to their excellent cost / performance ratios. Due to the different requirements nowadays multilayered articles with different type of materials are used, which from one side serve the needs, but have the disadvantage that recycling of these articles is difficult. From a recycling point of view, mono-material solutions would be preferred. At the same time the performance of the materials should not diminish.

Mono-material solutions are already known in the prior art.

EP 0 575 465 A1 relates to heat sealable compositions suitable for film and film structures comprising: (a) from 30 to 70 wt.-% of a low melting polymer comprising an ethylene based copolymer having a density of from 0.88 g/cm$^3$ to 0.915 g/cm$^3$, a melt index of from 1.5 dg/min to 7.5 dg/min, a molecular weight distribution no greater than 3.5, and a composition distribution breath index greater than 70 percent; and, (b), being different from (a), from 70 to 30 weight percent of a propylene based polymer having from 88 mol-% to 100 mol-% propylene and from 12 mole percent to 0 mole-% of an alpha-olefin other than propylene.

WO 2012/061168 A1 relates to a sealant composition, a method of producing the same, articles made therefrom, and a method for forming such articles. The sealant composition according to the present invention comprises: (a) from 70 to 99.5 wt.-% of an ethylene/alpha-olefin interpolymer composition, based on the total weight of the sealant composition, wherein said ethylene/alpha-olefin interpolymer composition comprises an ethylene/alpha-olefin interpolymer, wherein the ethylene/alpha-olefin interpolymer has a Comonomer Distribution Constant (CDC) in the range of from 15 to 250, and a density in the range of from 0.875 to 0.963 g/cm$^3$, a melt index (12) in a range of from 0.2 to 20 g/10 minutes, and long chain branching frequency in the range of from 0.02 to 3 long chain branches (LCB) per 1000C; (b) from 0.5 to 30 wt.-% of a propylene/alpha-olefin interpolymer composition, wherein said propylene/alpha-olefin interpolymer composition comprises a propylene/alpha-olefin copolymer or a propylene/ethylene/butene terpolymer, wherein said propylene/alpha-olefin copolymer has a crystallinity in the range of from 1 wt.-% to 30 wt.-%, a heat of fusion in the range of from 2 Joules/gram to 50 Joules/gram, and a DSC melting point in the range of 25°C to 110°C.

US 2021/0324185 A1 relates to polyolefin compositions containing one or more high-density polyethylenes (HDPEs) and linear low-density polyethylenes (LLDPEs) and methods for forming the same. The polyolefin composition contains about 40 wt.-% to about 60 wt.-% of HDPE and about 40 wt.-% to about 60 wt.-% of LLDPE, by weight of the polyolefin composition. The HDPE has a density of greater than 0.93 g/cm$^3$ and a melt index of about 0.2 dg/min to about 10 dg/min. The LLDPE has a density of less than 0.915 g/cm$^3$ and a melt index of about 0.2 dg/min to about 10 dg/min. The polyolefin composition has a density of about 0.91 g/cm$^3$ or greater, a melt index of about 0.5 dg/min to about 6 dg/min, and a Tw1-Tw2 value of about -25°C or less.

WO 2021/204799 A1 refers to a film comprising a sealing layer comprising a polyethylene A comprising moieties derived from ethylene and moieties derived from an $\alpha$-olefin comprising 4 to 10 carbon atoms, the polyethylene A having a density of ≥ 870 and ≤ 920 kg/m$^3$, preferably of ≥ 900 and ≤ 920 kg/m$^3$, as determined in accordance with ASTM D792 (2013), wherein the polyethylene A has: a fraction of material that is eluted in analytical temperature rising elution fractionation (a-TREF) at a temperature ≤ 30.0°C of ≥ 5.0 wt.-% and ≤ 15.0 wt.-%, preferably ≥ 7.5 wt.-% and ≤ 12.5 wt.-%, with regard to the total weight of the polyethylene; and two distinct peaks in the a-TREF curve in the elution temperature range of between 50.0 and 90.0°C, wherein the elution temperature gap between the two peaks is ≤ 17.5°C, preferably ≤ 15.0°C.

Starting therefrom, it is one objective of the present invention to provide a multilayered film which is not only easy to recycle but also has very good mechanical and sealing properties and acceptable optical properties.

These objects have been solved by the multilayered film according to claim 1 comprising a skin layer (SKL), a core layer (CL) and a sealing layer (SL); wherein the sealing layer (SL) comprises

(a) 15 to 85 wt.-% based on the total weight of the sealing layer (SL) of a metallocene-catalysed multimodal polyethylene copolymer (MMCP), which consists of

(i) 35.0 to 50.0 wt.-% based on the total weight of MMCP of an ethylene-1-butene polymer component (A); and

(ii) 50.0 to 65.0 wt.-% based on the total weight of MMCP of an ethylene-1-hexene polymer component (B); wherein

the ethylene-1-butene polymer component (A) has

- a density (ASTM D792) in the range of 920 to 960 kg/$m^3$;
- a $MFR_2$ (190°C, 2.16 kg, ISO 1133) in the range of 3.0 to 300.0 g/10 min;
- a 1-butene content in the range of 0.1 to 3.0 mol-%, based on the ethylene-1-butene polymer component (A); and

the ethylene-1-hexene polymer component (B) has

- a density (ASTM D792) in the range of 880 to 920 kg/$m^3$;
- a $MFR_2$ (190°C, 2.16 kg, ISO 1133) in the range of 0.001 to 1.0 g/10 min;
- a 1-hexene content in the range of 2.5 to 10.0 mol-%, based on the ethylene-1-hexene polymer compound (B); and

the metallocene-catalysed multimodal polyethylene copolymer (MMCP) has

- a density (ASTM D792) in the range of 910 to 930 kg/$m^3$;
- a $MFR_2$ (190°C, 2.16 kg, ISO 1133) in the range of 0.1 to 2.0 g/10 min; and
- a ratio of the $MFR_{21}$ (190°C, 21.6 kg, ISO 1133) to $MFR_2$ (190°C, 2.16 kg, ISO 1133), $MFR_{21}/MFR_2$, in the range of 22 to 70; and

(b) 15 to 85 wt.-% based on the total weight of the sealing layer (SL) of a plastomer being a copolymer of ethylene and a C3-C8 alpha-olefin; having

- a density (ASTM D792) in the range of 870 to 900 kg/$m^3$;
- a $MFR_2$ (190°C, 2.16 kg, ISO 1133) in the range of 0.1 to 10.0 g/10 min; and
- a melting point (measured by DSC as described in the description) in the range of 65 to 80°C; and;

wherein the weight proportions of components (a) and (b) add up to 100 wt.-%.

Advantageous embodiments of the multilayered film in accordance with the present invention are specified in the dependent claims 2 to 14. The present invention further relates in accordance with claim 15 to the use of the film according to the present invention as packaging material.

**Definitions**

A metallocene-catalysed (linear low density) polyethylene is defined in this invention as a (linear low density) polyethylene copolymer, which has been produced in the presence of a metallocene catalyst.

A Ziegler-Natta-catalysed linear low density polyethylene is defined in this invention as a (linear low density) polyethylene copolymer, which has been produced in the presence of a Ziegler-Natta catalyst.

For the purpose of the present invention the metallocene-catalysed (linear low density) polyethylene consisting of an ethylene-1-butene polymer component (A) and an ethylene-1-hexene polymer component (B) means that the polymer is produced in an at least 2-stage sequential polymerization process, wherein first component (A) is produced and component (B) is then produced in the presence of component (A) in a subsequent polymerization step, yielding the metallocene-catalysed (linear low density) polyethylene or vice versa, i.e. first component (B) is produced and component (A) is then produced in the presence of component (B) in a subsequent polymerization step, yielding the metallocene-catalysed (linear low density) polyethylene.

The term "multimodal" in context of multimodal metallocene-catalysed (linear low density) polyethylene means herein multimodality with respect to melt flow rate (MFR) of at least the ethylene polymer components (A) and (B), i.e. the ethylene polymer components (A) and (B), have different MFR values. The multimodal metallocene-catalysed (linear low density) polyethylene can have further multimodality between the ethylene polymer components (A) and (B) with respect to one or more further properties, like density, comonomer type and/or comonomer content, as will be described later below.

Low density polyethylene (LDPE) is defined in this invention as low density polyethylene copolymer, which has been preferably produced in a high-pressure process.

An ethylene homopolymer is a polymer that essentially consists of ethylene monomer units. Due to impurities especially during commercial polymerization processes, an ethylene homopolymer can comprise up to 1.0 mol-% comonomer units, preferably up to 0.5 mol-% comonomer units and most preferably up to 0.01 mol-% comonomer units.

A mono-material film in the context of the present invention may be a film using mainly one kind of polymer for

example polyethylene, but no other polymers in significant amounts. However, in case the film is polyethylene-based different polyethylenes may be present.

Where the term "comprising" is used in the present description and claims, it does not exclude other non-specified elements of major or minor functional importance. For the purposes of the present invention, the term "consisting of" is considered to be a preferred embodiment of the term "comprising of". If hereinafter a group is defined to comprise at least a certain number of embodiments, this is also to be understood to disclose a group, which preferably consists only of these embodiments.

Whenever the terms "including" or "having" are used, these terms are meant to be equivalent to "comprising" as defined above.

Where an indefinite or definite article is used when referring to a singular noun, e.g. "a", "an" or "the", this includes a plural of that noun unless something else is specifically stated.

Metallocene-catalysed multimodal polyethylene copolymer (MMCP)

The sealing layer of the multilayered film according to the present invention comprises a specific metallocene-catalysed multimodal polyethylene copolymer (MMCP). The other layers may also comprise said copolymer (MMCP).

The metallocene-catalysed multimodal polyethylene copolymer (MMCP) consists of (i) 35.0 to 50.0 wt.-% of an ethylene-1-butene polymer component (A), and (ii) 50.0 to 65.0 wt.-% of an ethylene-1-hexene polymer component (B).

The ethylene-1-butene polymer component (A) has a density (ASTM D792) in the range of 920 to 960 kg/m$^3$, a $MFR_2$ (190°C, 2.16 kg, ISO 1133) in the range of 3.0 to 300.0 g/10 min and a 1-butene content in the range of 0.1 to 3.0 mol-%, based on the ethylene-1-butene polymer component (A).

The ethylene-1-hexene polymer component (B) has a density (ASTM D792) in the range of 880 to 920 kg/m$^3$, a $MFR_2$ (190°C, 2.16 kg, ISO 1133) in the range of 0.001 to 1.0 g/10 min and a 1-hexene content in the range of 2.5 to 10.0 mol-%, based on the ethylene-1-hexene polymer compound (B).

The metallocene-catalysed multimodal polyethylene copolymer (MMCP) has a density (ASTM D792) in the range of 910 to 930 kg/m$^3$, a $MFR_2$ (190°C, 2.16 kg, ISO 1133) in the range of 0.1 to 2.0 g/10 min and a ratio of the $MFR_{21}$ (190°C, 21.6 kg, ISO 1133) to $MFR_2$ (190°C, 2.16 kg, ISO 1133), $MFR_{21}/MFR_2$, in the range of 22 to 70.

In a preferred embodiment of the present invention, the ethylene-1-butene polymer component (A) consists of an ethylene polymer fraction (A-1) and (A-2).

In case that the ethylene-1-butene polymer component (A) consists of ethylene polymer fractions (A-1) and (A-2), the $MFR_2$ of the ethylene polymer fractions (A-1) and (A-2) may be the same or different from each other.

The ethylene polymer fractions (A-1) and (A-2) have an $MFR_2$ (190°C, 2.16 kg, ISO 1133) in the range of 3.0 to 300.0 g/10 min, preferably of 100 to 150.0 g/10 min, more preferably of 110 to 130 g/10 min or 115 to 125 g/10 min.

In a preferred embodiment the $MFR_2$ of the ethylene polymer components (A) and (B) are different from each other.

The ethylene polymer component (A) has an $MFR_2$ (190°C, 2.16 kg, ISO 1133) in the range of 3.0 to 300 g/10 min, preferably of 3.5 to 250 g/10 min, more preferably of 4.0 to 200 g/10 min, even more preferably of 4.5 to 150 g/10 min or 120 to 130 g/10 min.

The ethylene polymer component (B) has an $MFR_2$ (190°C, 2.16 kg, ISO 1133) in the range of 0.001 to 1.0 g/10 min, preferably of 0.005 to 0.8 g/10 min, more preferably of 0.008 to 0.6 g/10 min and even more preferably of 0.01 to 0.3 g/10 min.

The $MFR_2$ (190°C, 2.16 kg, ISO 1133) of the multimodal copolymer (MMCP) is in the range of 0.1 to 2.0 g/10 min, preferably 0.2 to 1.7 g/10 min, more preferably 0.5 to 1.5 g/10 min and even more preferably of 0.6 to 0.8 g/10 min.

Naturally, in addition to multimodality with respect to, i.e. difference between, the $MFR_2$ of ethylene polymer components (A) and (B), the multimodal PE of the invention can also be multimodal e.g. with respect to one or both of the two further properties: multimodality with respect to, i.e. difference between, the comonomer content(s) present in the ethylene polymer components (A) and (B); and/or the density of the ethylene polymer components (A) and (B). Preferably, the multimodal copolymer (MMCP) is further multimodal with respect to the comonomer content of the ethylene polymer components (A) and (B).

The comonomer type for the polymer fractions (A-1) and (A-2) is the same, thus both fractions therefore have 1-butene as comonomer.

The comonomer content of component (A) and (B) can be measured, or, in case, and preferably, one of the components is produced first and the other thereafter in the presence of the first produced in a so called multistage process, then the comonomer content of the first produced component, e.g. component (A), can be measured and the comonomer content of the other component, e.g. component (B), can be calculated according to following equation:

Comonomer content (mol-% or wt.-%) in component B = (comonomer content (mol-% or wt.-%) in final product – (weight fraction of component A * comonomer content (mol-% or wt.-%) in component A)) / (weight fraction of component B).

The multimodal copolymer (MMCP) has a ratio of the $MFR_{21}$ (190°C, 21.6 kg, ISO 1133) to $MFR_2$ (190°C, 2.16 kg, ISO 1133), $MFR_{21}/MFR_2$, in the range of from 22 to 70, preferably from 23 to 50, more preferably from 25 to 48 and still more preferably from 28 to 46.

The total amount of 1-butene, based on the multimodal polymer (MMCP) is preferably in the range of from 0.1 to 1.0 mol-%, more preferably 0.2 to 0.8 mol-% and even more preferably 0.3 to 0.7 mol-%.

The total amount of 1-hexene, based on the multimodal polymer (MMCP) preferably is in the range of 1.5 to 8.0 mol-%, more preferably 2.0 to 6.0 mol-% and even more preferably 2.2 to 4.0 mol-%.

The total amount (mol-%) of 1-butene, present in the ethylene-1-butene polymer component (A) is of 0.1 to 3.0 mol-%, preferably of 0.3 to 2.6 mol-%, more preferably of 0.5 to 2.0 mol-%, even more preferably of 0.6 to 1.8 mol-%, based on the ethylene-1-butene polymer component (A).

The total amount (mol-%) of 1-hexene, present in the ethylene-1-hexene polymer component (B) is of 2.5 to 10.0 mol-%, preferably of 3.0 to 8.0 mol-%, more preferably of 3.5 to 6.0 mol-%, based on the ethylene-1-hexene polymer component (B).

Even more preferably the multimodal polymer (MMCP) of the invention is further multimodal with respect to difference in density between the ethylene polymer component (A) and ethylene polymer component (B). Preferably, the density of ethylene polymer component (A) is different, preferably higher, than the density of the ethylene polymer component (B).

The density of the ethylene polymer component (A) is in the range of 920 to 960 $kg/m^3$, preferably of 925 to 955 $kg/m^3$, more preferably 930 to 950 $kg/m^3$ and/or the density of the ethylene polymer component (B) is in the range of 880 to 920 $kg/m^3$, preferably of 885 to 915 $kg/m^3$ and more preferably of 890 to 910 $kg/m^3$.

The polymer fractions (A-1) and (A-2) have a density in the range of from 925 to 960 $kg/m^3$, preferably of 925 to 955 $kg/m^3$, more preferably of 930 to 950 $kg/m^3$, and most preferred 935 to 945 $kg/m^3$.

The density of polymer fraction (A-1) and (A-2) may be the same or may be different from each other.

The metallocene catalysed multimodal copolymer (MMCP) is preferably a linear low density polyethylene (LLDPE) which has a well-known meaning.

The density of the multimodal copolymer (MMCP) is in the range of 910 to 930 $kg/m^3$, preferably of 912 to 925 $kg/m^3$ and more preferably of 915 to 920 $kg/m^3$.

More preferably the multimodal copolymer (MMCP) is multimodal at least with respect to, i.e. has a difference between, the $MFR_2$, the comonomer content as well as with respect to, i.e. has a difference between the density of the ethylene polymer components, (A) and (B), as defined above, below or in the claims including any of the preferable ranges or embodiments of the polymer composition.

The multimodal copolymer (MMCP) furthermore may have a molecular weight distribution (Mw/Mn) determined with GPC in the range of at least 3.5 up to 7.2, preferably in the range of 4.0 to 7.0 and more preferably in the range of 4.5 to 6.8.

Furthermore the multimodal copolymer (MMCP) has a ratio of the soluble fraction at 35°C determined with crossfractionation chromatography (CFC) as described in the experimental part to the density of the multimodal polyethylene copolymer (MMCP), $SF@35°C/density_P$ of below 0.007, preferably below 0.006, more preferably below 0.005, like in the range of 0.001 to below 0.007, preferably 0.001 to below 0.006 and more preferably 0.001 to below 0.005.

The amount of the soluble fraction at 35°C, based on the total multimodal polyethylene copolymer (MMCP) is in the range of 0.5 to 6.0 wt.-%, preferably 0.8 to 5.0 wt.-%, more preferably 1.0 to 4.0 wt.-%.

In an embodiment of the present invention the multimodal polyethylene copolymer (MMCP) is additionally characterized by a ratio of the molecular weight (Mw) of the low crystalline fraction (LCF) to the molecular weight (Mw) of the high crystalline fraction (HCF), Mw(Tp(LCF)/Mw(Tp(HCF), determined as described in the experimental part, in the range of from > 1.3 to 10.0, preferably in the range of 2.0 to 8.0, and more preferably of 2.2 to 6.0 and/or

a ratio of the breadth at Half peak height (LCF)/ (98 - Tp(LCF)) in the range of from 0.10 to 1.50, preferably in the range of 0.15 to 1.2 and more preferably in the range of 0.20 to 1.0 and/or

a delta of Mw(LCF) - Mw(HCF) of at least 31000 up to 200000 g/mol, preferably 50000 to 180000 g/mol, more preferably 80000 to 150000 g/mol.

Preferably, the multimodal polyethylene copolymer (MMCP) is additionally characterized by at least 2 of the above mentioned parameters, more preferably by all of the 3 mentioned parameters.

Definition of high crystalline fraction (HCF) and low crystalline fraction (LCF):
The high crystalline fraction (HCF) is the amount in wt.-% of the polymer fraction with a crystallization temperature higher than 90°C, which mainly contains the homo-polyethylene chains or chains with a very low branching content.

The low crystalline fraction (LCF) is then the amount in wt.-% of the polymer fraction with a crystallization temperature between 30 to below 90°C.

It is within the scope of the invention, that the first and the second ethylene polymer fraction (A-1 and A-2) of the ethylene polymer component (A) are present in a weight ratio of 4:1 up to 1:4, such as 3:1 to 1:3, or 2:1 to 1:2, or 1:1.

The ethylene polymer component (A) is present in an amount of 35.0 to 50.0 wt.-% based on the multimodal copolymer (MMCP), preferably in an amount of 36.0 to 48.0 wt.-% and even more preferably in an amount of 38.0 to 45.0 wt.-%.

Thus, the ethylene polymer component (B) is present in an amount of 50.0 to 65.0 wt.-% based on the multimodal copolymer (MMCP), preferably in an amount of 52.0 to 64.0 wt.-% and more preferably in an amount of 55.0 to 62.0 wt.-%.

The metallocene-catalysed multimodal copolymer (MMCP), can be produced in a 2-stage process, preferably comprising a slurry reactor (loop reactor), whereby the slurry (loop) reactor is connected in series to a gas phase reactor (GPR), whereby the ethylene polymer component (A) is produced in the loop reactor and the ethylene polymer component (B) is produced in GPR in the presence of the ethylene polymer component (A) to produce the multimodal copolymer (MMCP).

In case that the ethylene component (A) of the multimodal copolymer (MMCP) consists of ethylene polymer fractions (A-1) and (A-2), the multimodal copolymer (MMCP) can be produced with a 3-stage process, preferably comprising a first slurry reactor (loop reactor 1), whereby the first slurry loop reactor is connected in series with another slurry reactor (loop reactor 2), so that the first ethylene polymer fraction (A-1) produced in the loop reactor 1 is fed to the loop reactor 2, wherein the second ethylene polymer fraction (A-2) is produced in the presence of the first fraction (A-1). The loop reactor 2 is thereby connected in series to a gas phase reactor (GPR), so that the first ethylene polymer component (A) leaving the second slurry reactor is fed to the GPR to produce a trimodal polyethylene copolymer. In this case, the reaction conditions in the two slurry reactors are chosen in a way that in the two slurry reactors different products in view of MFR and/or density are produced.

Such a process is described inter alia in WO 2016/198273 A1, WO 2021/009189 A1, WO 2021/009190 A1, WO 2021/009191 A1 and WO 2021/009192 A1. Full details of how to prepare suitable metallocene-catalysed multimodal copolymer (MMCP) can be found in these references.

The metallocene-catalysed multimodal copolymer (MMCP) is produced by using a metallocene catalyst. The metallocene catalyst preferably comprises a metallocene complex and a cocatalyst. The metallocene compound or complex is referred herein also as organometallic compound (C).

The organometallic compound (C) comprises a transition metal (M) of Group 3 to 10 of the Periodic Table (IUPAC 2007) or of an actinide or lanthanide.

The term "an organometallic compound (C)" in accordance with the present invention includes any metallocene or non-metallocene compound of a transition metal, which bears at least one organic (coordination) ligand and exhibits the catalytic activity alone or together with a cocatalyst. The transition metal compounds are well known in the art and the present invention covers compounds of metals from Group 3 to 10, e.g. Group 3 to 7, or 3 to 6, such as Group 4 to 6 of the Periodic Table, (IUPAC 2007), as well as lanthanides or actinides.

In an embodiment, the organometallic compound (C) has the following formula (I):

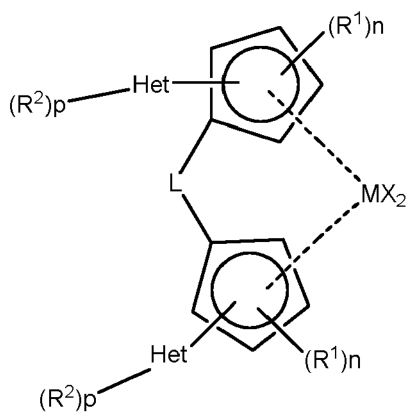

(I)

wherein each X is independently a halogen atom, a $C_{1-6}$-alkyl group, $C_{1-6}$-alkoxy group, phenyl or benzyl group; each Het is independently a monocyclic heteroaromatic group containing at least one heteroatom selected from O

or S;
L is $-R'_2Si-$, wherein each R' is independently $C_{1-20}$-hydrocarbyl or $C_{1-10}$-alkyl substituted with alkoxy having 1 to 10 carbon atoms;
M is Ti, Zr or Hf;
each $R^1$ is the same or different and is a $C_{1-6}$-alkyl group or $C_{1-6}$-alkoxy group;
each n is 1 to 2;
each $R^2$ is the same or different and is a $C_{1-6}$-alkyl group, $C_{1-6}$-alkoxy group or $-Si(R)_3$ group;
each R is $C_{1-10}$-alkyl or phenyl group optionally substituted by 1 to 3 $C_{1-6}$-alkyl groups; and
each p is 0 to 1.

Preferably, the compound of formula (I) has the structure

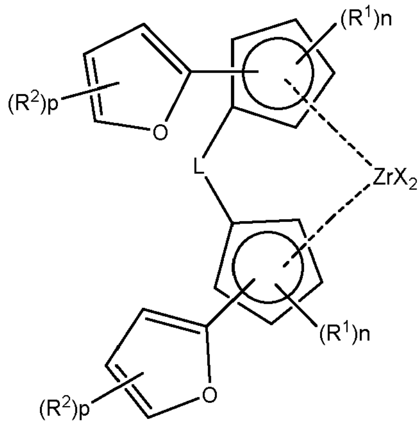

(I´)

wherein each X is independently a halogen atom, a $C_{1-6}$-alkyl group, $C_{1-6}$-alkoxy group, phenyl or benzyl group;
L is a $Me_2Si$-;
each $R^1$ is the same or different and is a $C_{1-6}$-alkyl group, e.g. methyl or t-Bu;
each n is 1 to 2;
$R^2$ is a $-Si(R)_3$ alkyl group; each p is 1;
each R is $C_{1-6}$-alkyl or phenyl group.

Highly preferred complexes of formula (I) are

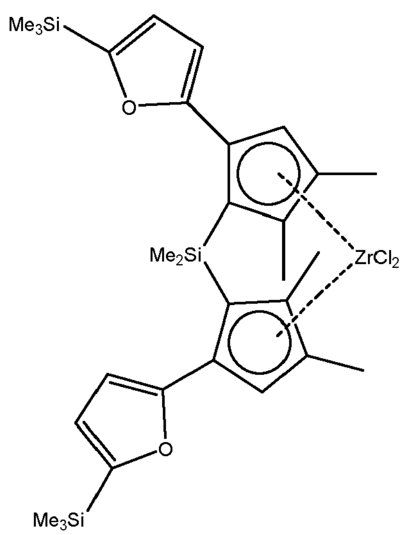

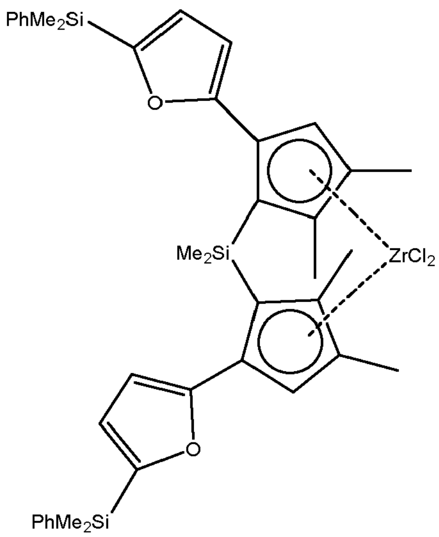

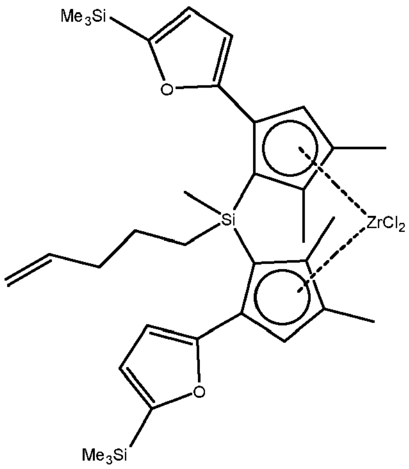

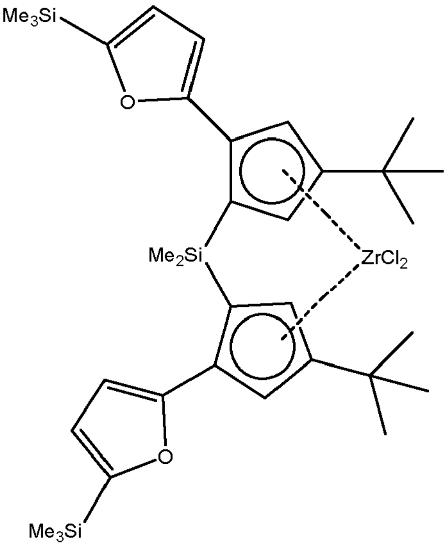

Most preferably the complex dimethylsilanediylbis-[2-(5-trimethylsilylfuran-2-yl)-4,5-dimethylcyclopentadien-1-yl] zirconium dichloride is used.

More preferably the ethylene polymer components (A) and (B) of the multimodal copolymer (MMCP) are produced using, i.e. in the presence of, the same metallocene catalyst.

To form a catalyst, a cocatalyst, also known as an activator, is used, as is well known in the art. Cocatalysts comprising Al or B are well known and can be used here. The use of aluminoxanes (e.g. MAO) or boron based cocatalysts (such as borates) is preferred.

Polyethylene copolymers made using single site catalysis, as opposed to Ziegler Natta catalysis, have characteristic features that allow them to be distinguished from Ziegler Natta materials. In particular, the comonomer distribution is more homogeneous. This can be shown using TREF or Crystaf techniques. Catalyst residues may also indicate the catalyst used. Ziegler Natta catalysts would not contain a Zr or Hf group (IV) metal for example.

<u>Plastomer</u>

The sealing layer of the multilayered film according to the present invention comprises a specific plastomer. The other layers may also comprise said plastomers.

The sealing layer comprises 15 to 85 wt.-% based on the total weight of the sealing layer (SL) of a plastomer being a copolymer of ethylene and a C3-C8 alpha-olefin; having a density (ASTM D792) in the range of 870 to 900 $kg/m^3$, a $MFR_2$ (190°C, 2.16 kg, ISO 1133) in the range of 0.1 to 10.0 g/10 min; and a melting point (measured by DSC as described in the description) in the range of 65 to 80°C.

According to a preferred embodiment in accordance with the present invention the plastomer is a copolymer of ethylene and 1-octene and has one or more of the following properties:

- 1-octene content in the range of 18 to 45 wt.-% and preferably in the range of 20 to 30 wt.-% based on the total weight of the copolymer; and/or
- a density (ASTM D792) in the range of 870 to 890 $kg/m^3$ and preferably in the range of 880 to 886 $kg/m^3$; and/or
- a $MFR_2$ (190°C, 2.16 kg, ISO 1133) in the range of 0.1 to 5.0 g/10 min and preferably in the range of 0.5 to 1.5; and/or
- a melting point (measured by DSC as described in the description) in the range of 68 to 77°C and preferably in the range of 71 to 75°C.

The plastomers in accordance with the present invention are commercially available, e.g. from Borealis under the tradename Queo (such as Queo 8201).

Alternatively, suitable ethylene-based plastomers may be prepared by known processes, in a one stage or two stage polymerization process, comprising solution polymerization, slurry polymerization, gas phase polymerization or combinations therefrom, in the presence of suitable catalysts, like vanadium oxide catalysts or single-site catalysts, e.g. metallocene or constrained geometry catalysts, known to the person skilled in the art.

Preferably, the ethylene-based plastomers are prepared by a one stage or two stage solution polymerization process, especially by high temperature solution polymerization process at temperatures higher than 100°C.

Such process is essentially based on polymerizing the monomer and a suitable comonomer in a liquid hydrocarbon solvent in which the resulting polymer is soluble. The polymerization is carried out at a temperature above the melting point of the polymer, as a result of which a polymer solution is obtained. This solution is flashed in order to separate the polymer from the unreacted monomer and the solvent. The solvent is then recovered and recycled in the process.

Plastomers of the invention are ideally formed using metallocene-type catalysts. A known solution technology suitable for the process according to the invention is the Borceed™ technology.

Multilayered film

A preferred embodiment of the multilayered film in accordance with the present invention stipulates that the skin layer (SKL) of the multilayered film has a thickness in the range of 1 to 100 μm, preferably in the range of 5 to 80 μm and more preferably in the range of 10 to 15 μm.

According to another preferred embodiment in accordance with the present invention the core layer (CL) of the multilayered film has a thickness in the range of 10 to 200 μm, preferably in the range of 20 to 80 μm and more preferably in the range of 30 to 45 μm.

In still another preferred embodiment according to the present invention the sealing layer (SL) of the multilayered film has a thickness in the range of 1 to 50 μm, preferably in the range of 5 to 25 μm and more preferably in the range of 10 to 15 μm.

In a further preferred embodiment according to the present invention the multilayered film has a thickness in the range of 12 to 350 μm, preferably in the range of 40 to 150 μm and more preferably in the range of 50 to 70 μm.

According to another preferred embodiment in accordance with the present invention the multilayered film consists of the skin layer (SKL), the core layer (CL) and the sealing layer(SL).

The skin layer (SKL) preferably comprises 80 to 95 wt.-%, more preferably 82 to 93 wt.-% and still more preferably 88 to 92 wt.-% based on the total weight of the skin layer (SKL) of the metallocene-catalysed multimodal polyethylene copolymer (MMCP); and 5 to 20 wt.-%, preferably 7 to 18 wt.-%, more preferably 8 to 12 wt.-% based on the total weight of the skin layer (SKL) of a LDPE having a density (ASTM D792) in the range of 910 to 930 kg/$m^3$, preferably of 920 to 925 kg/$m^3$ and a $MFR_2$ (190°C, 2.16 kg, ISO 1133) in the range of 0.5 to 4.0 g/10 min and preferably of 0.5 to 1.0 g/10 min.

The core layer (CL) preferably comprises 10 to 35 wt.-%, more preferably 15 to 30 wt.-% and still more preferably 18 to 25 wt.-% based on the total weight of the core layer (CL) of the metallocene-catalysed multimodal polyethylene copolymer (MMCP); and 65 to 90 wt.-%, more preferably 70 to 85 wt.-% and still more preferably 75 to 82 wt.-% based on the total weight of the core layer (CL) of a Ziegler-Natta catalysed linear low density polyethylene being preferably a multimodal alpha-olefin terpolymer, preferably having a density (ASTM D792) in the range of 920 to 970 kg/$m^3$ and more preferably of 930 to 938 kg/$m^3$ and a $MFR_5$ (190°C, 2.16 kg, ISO 1133) in the range of 0.1 to 2.5 g/10 min and preferably of 0.5 to 1.2 g/10 min.

Still another preferred embodiment in accordance with the present invention stipulates that the skin layer (SKL), the core layer (CL) and the sealing layer (SL) comprise the metallocene-catalysed multimodal polyethylene copolymer (MMCP) and preferably said multilayered film consists of polyethylene-based polymers. It is self-explanatory that the core layer (CL) is placed between the skin layer (SKL) and the sealing layer (SL).

According to another preferred embodiment in accordance with the present invention the content of MMCP (a) in the sealing layer (SL) based on the total weight of said layer is in the range of 20 to 40 wt.-% or 60 to 80 wt.-%, preferably in the range of 25 to 35 wt.-% or 65 to 75 wt.-% and more preferably in the range of 28 to 32 wt.-% or 68 to 72 wt.-%; and/or the content of plastomer (b) in the sealing layer (SL) based on the total weight of said layer is in the range of 20 to 40 wt.-% or 60 to 80 wt.-%, preferably in the range of 25 to 35 wt.-% or 65 to 75 wt.-% and more preferably in the range of 28 to 32 wt.-% or 68 to 72 wt.-%.

Another preferred embodiment in accordance with the present invention stipulates that the multilayered film has a Tensile Modulus in MD (ISO 527-3) in the range of 150 to 300 MPa, preferably in the range of 250 to 290 MPa; and/or a Tensile Modulus in TD (ISO 527-3) in the range of 150 to 400 MPa, preferably in the range of 300 to 350 MPa; and/or a Dart Drop Strength (ISO 7765-1) in the range of 500 to 2000 g, preferably in the range of 1100 to 1700 g, more preferably in the range of 1500 to 1600 g and even more preferably in the range of 1500 to 1550.

In another preferred embodiment in accordance with the present invention the multilayered film has a Haze (ASTM D1003-00) in the range of 5 to 15 %, preferably in the range of 10 to 13 %; and/or a Sealing Initiation Temperature determined as described in the specification in the range of 50 to 85°C, preferably in the range of 55 to 73°C and more preferably in the range of 56 to 72°C; and/or a Hot Tack Force determined as described in the specification in the range of 4 to 12 N, preferably in the range of 5 to 8 N; and/or a Hot Tack Temperature determined as described in the specification in the range of 60 to 90°C, preferably in the range of 65 to 88°C.

The polymers used in the multilayered article according to the present invention may contain additives and fillers and the used amounts thereof are conventional in the field of film applications. Examples of such additives are,

among others, antioxidants, process stabilizers, UV-stabilizers, pigments, fillers, antistatic additives, antiblock agents, nucleating agents, acid scavengers as well as polymer processing agent (PPA).

It is understood herein that any of the additives and/or fillers can optionally be added in form of a so-called master batch, which comprises the respective additive(s) together with a carrier polymer. In such case the carrier polymer is not calculated to the polymer components of the metallocene-catalysed multimodal polyethylene copolymer (MMCP), but to the amount of the respective additive(s), based on the total amount of polymer composition (100 wt.-%).

Method

Another aspect of the present invention relates to a method for producing the multilayered article.

The multilayered film according to the present invention is generally prepared by a conventional process, wherein the layers of the film are co-extruded.

The different polymer components in any of the layers of the film are typically intimately mixed prior to layer formation, for example using a twin screw extruder, preferably a counterrotating extruder or a co-rotating extruder. Then, the blends are converted into a coextruded film.

Generally, the multilayered film according to the present invention can be produced by a blown film or cast film process, preferably by a blown film process.

In order to manufacture such films, for example at least three polymer melt streams are simultaneously extruded (i.e. coextruded) through a multi-channel tubular, annular or circular die to form a tube which is blown-up, inflated and/or cooled with air (or a combination of gases) to form a film. The manufacture of blown film is a well-known process.

The blown (co-)extrusion can be effected at a temperature in the range 150 to 230°C, more preferably 160 to 225°C and cooled by blowing gas (generally air) at a temperature of 10 to 40°C, more preferably 12 to 16°C to provide a frost line height of 0.5 to 4 times, more preferably 1 to 2 times the diameter of the die.

The blow up ratio (BUR) should generally be in the range of 1.5 to 3.5, preferably 2.0 to 3.0, more preferably 2.1 to 2.8.

Use

A further aspect of the present invention refers to the use of the multilayered film as packaging material, preferably for food and/or medical products.

The invention will now be described with reference to the following non-limiting examples.

## Experimental Part

### A. Measuring methods

The following definitions of terms and determination methods apply for the above general description of the invention as well as to the below examples unless otherwise defined.

### Melt Flow Rate

The melt flow rate (MFR) was determined according to ISO 1133 - Determination of the melt mass-flow rate (MFR) and melt volume-flow rate (MVR) of thermoplastics -- Part 1: Standard method and is indicated in g/10 min. The MFR is an indication of the flowability, and hence the processability, of the polymer. The higher the melt flow rate, the lower the viscosity of the polymer. The MFR of polyethylene is determined at a temperature of 190°C and may be determined at different loadings such as 2.16 kg ($MFR_2$), 5 kg ($MFR_5$) or 21.6 kg ($MFR_{21}$).

Calculation of $MFR_2$ of Component B and of Fraction (A-2)

$$logA = x \cdot logB + (1 - x) \cdot logC$$

$$C = 10^\wedge \frac{(logA - x.logB)}{(1-x)}$$

For Component B:

B = $MFR_2$ of Component (A)
C = $MFR_2$ of Component (B)
A = final $MFR_2$ (mixture) of multimodal polyethylene copolymer (MMCP)
X = weight fraction of Component (A)

For Fraction (A-2):

B = $MFR_2$ of 1st fraction (A-1)
C = $MFR_2$ of 2nd fraction (A-2)
A = final $MFR_2$ (mixture) of loop polymer (=Component (A))
X = weight fraction of the 1st fraction (A-1).

**Density**

Density of the polymer was measured according to ASTM; D792, Method B (density by balance at 23°C) on compression moulded specimen prepared according to EN ISO 1872-2 and is given in $kg/m^3$.

**DSC analysis, melting ($T_m$) and crystallization temperature ($T_c$)**

Data may be measured with a TA Instrument Q2000 differential scanning calorimetry (DSC) on 5 to 7 mg samples. DSC was run according to ISO 11357 / part 3 /method C2 in a heat / cool / heat cycle with a scan rate of 10 °C/min in the temperature range of -30 to +225°C.

Crystallization temperature ($T_c$) and crystallization enthalpy ($H_c$) were determined from the cooling step, while melting temperature ($T_m$) and melting enthalpy ($H_m$) are determined from the second heating step.

**Dart drop strength (DDI): Impact resistance by free-falling dart method**

The DDI was measured according to ISO 7765-1:1988 / Method A from the films as produced indicated below. This test method covers the determination of the energy that causes films to fail under specified conditions of impact of a free-falling dart from a specified height that would result in failure of 50 % of the specimens tested (Staircase method A). A uniform missile mass increment is employed during the test and the missile weight is decreased or increased by the uniform increment after test of each specimen, depending upon the result (failure or no failure) observed for the specimen.

Standard conditions:

Conditioning time: > 96 h
Test temperature: 23 °C
Dart head material: phenolic
Dart diameter: 38 mm
Drop height: 660 mm

Results:

Impact failure weight - 50% [g]

Results:

Impact failure weight - 50% [g]

**Tensile modulus (TM)**

Tensile modulus (MPa) was measured in machine (MD) and transverse direction (TD) according to ISO 527-3 on film samples prepared as described below with a film thickness of 60 μm and at a cross head speed of 1 mm/min.

**Haze**

The haze was determined according to ASTM D1003-00 on films blown as described below with a thickness of 60 μm.

**Sealing initiation temperature (SIT); sealing end temperature (SET), sealing range**

The method determines the sealing temperature range (sealing range) of polyethylene films, in particular blown films or cast films. The sealing temperature range is the temperature range, in which the films can be sealed according to conditions given below.

The lower limit (heat sealing initiation temperature (SIT)) is the sealing temperature at which a sealing strength of 5 N is achieved. The upper limit (sealing end temperature (SET)) is reached, when the films stick to the sealing device.

The measurement was done according to the slightly modified ASTM F1921 - 12, where the test parameters sealing pressure, cooling time and test speed have been modified. The determination of the force/temperature curve was continued until thermal failure of the film.

The sealing range was determined on a J&B Universal Sealing Machine Type 4000 with a blown film of 60 μm thickness with the following further parameters:

Conditioning time: > 96 h
Specimen width: 25 mm
Sealing pressure: 0.4 N/mm$^2$ (PE)
Sealing time: 1 sec
Delay time: 30 sec
Sealing jaws dimension: 50×5 mm
Sealing jaws shape: flat
Sealing jaws coating: Niptef
Sealing temperature: ambient - 240°C
Sealing temperature interval: 5°C
Start temperature: 50°C
Grip separation rate: 42 mm/sec

**Hot Tack Temperature (HTT) and Hot Tack Force (HTF)**

HTT (lowest temperature to get maximum Hot Tack Force) and HTF (maximum Hot Tack Force) were measured according to ASTM F 1921 method B on a three-layer blown film of 60 μm thickness with below settings:

Q-name instrument: Hot Tack - Sealing Tester
Model: J&B model 4000 MB
Sealbar length: 50 [mm]
Seal bar width: 5 [mm]
Seal bar shape: flat
Seal Pressure: 0.15 N/mm$^2$
Seal Time: 1s
Coating of sealing bars: NIPTEF ®
Roughness of coating sealing bars 1 [μm]
Film Specimen width: 25 mm
Cool time: 0.2 s
Peel Speed: 200 mm/s
Start temperature: 50 °C
End temperature: burn through and/or shrinking
Increments: 5 °C

All film test specimens were prepared in standard atmospheres for conditioning and testing at 23°C (± 2°C) and 50 % (± 10 %) relative humidity. The minimum conditioning time of test specimen in standard atmosphere just before start testing is at least 40 hours. The minimum storage time between extrusion of film sample and start testing is at least 88 hours. The hot-tack measurement determines the strength of heat seals formed in the films, immediately after the seal has been made and before it cools to ambient temperature.

HTF was measured as a function of temperature within the temperature range and with temperature increments

as indicated above. The number of test specimens were at least 3 specimens per temperature. HTF is evaluated as the highest force (maximum peak value) with failure mode "peel".

**Comonomer contents - Quantification of microstructure by NMR spectroscopy**

Quantitative nuclear-magnetic resonance (NMR) spectroscopy was used to quantify the comonomer content of the polymers.

Quantitative $^{13}C\{^1H\}$ NMR spectra were recorded in the molten-state using a Bruker Avance III 500 NMR spectrometer operating at 500.13 and 125.76 MHz for $^1H$ and $^{13}C$ respectively. All spectra were recorded using a $^{13}C$ optimized 7 mm magic-angle spinning (MAS) probehead at 150°C using nitrogen gas for all pneumatics. Approximately 200 mg of material was packed into a 7 mm outer diameter zirconia MAS rotor and spun at 4 kHz. This setup was chosen primarily for the high sensitivity needed for rapid identification and accurate quantification {klimke06, parkinson07, castignolles09}. Standard single-pulse excitation was employed utilizing the NOE at short recycle delays of 3 s {pollard04, klimke06} and the RS-HEPT decoupling scheme{fillip05,griffin07}. A total of 1024 (1k) transients were acquired per spectra.

Quantitative $^{13}C\{^1H\}$ NMR spectra were processed, integrated and relevant quantitative properties determined from the integrals. All chemical shifts are internally referenced to the bulk methylene signal (δ+) at 30.00 ppm.

The amount of ethylene was quantified using the integral of the methylene (δ+) sites at 30.00 ppm accounting for the number of reporting sites per monomer:

$$E = I_{\delta+} / 2$$

the presence of isolated comonomer units is corrected for based on the number of isolated comonomer units present:

$$Etotal = E + (3*B + 2*H) / 2$$

where B and H are defined for their respective comonomers. Correction for consecutive and non-consecutive commoner incorporation, when present, is undertaken in a similar way.

Characteristic signals corresponding to the incorporation of 1-butene were observed and the comonomer fraction calculated as the fraction of 1-butene in the polymer with respect to all monomer in the polymer:

$$fBtotal = Btotal / (Etotal + Btotal + Htotal)$$

The amount isolated 1-butene incorporated in EEBEE sequences was quantified using the integral of the *B2 sites at 39.8 ppm accounting for the number of reporting sites per comonomer:

$$B = I_{*B2}$$

If present the amount consecutively incorporated 1-butene in EEBBEE sequences was quantified using the integral of the ααB2B2 site at 39.4 ppm accounting for the number of reporting sites per comonomer:

$$BB = 2 * I\alpha\alpha B2B2$$

If present the amount non-of reporting sites per comonomer:

$$HEH = 2 * I\beta\beta B4B4$$

Sequences of HHH were not observed. The total 1-hexene content was calculated based on the sum of isolated, consecutive and non consecutively incorporated 1-hexene:

$$Htotal = H + HH + HEH$$

The total mole fraction of 1-hexene in the polymer was then calculated as:

$$fH = Htotal / ( Etotal + Btotal + Htotal)$$

The mole percent comonomer incorporation is calculated from the mole fraction:

$$B [mol\%] = 100 * fB$$

$$H [mol\%] = 100 * fH$$

The weight percent comonomer incorporation is calculated from the mole fraction:

$$B [wt\%] = 100 * ( fB * 56.11) / ( (fB * 56.11) + (fH * 84.16) + ((1-(fB + fH)) * 28.05) )$$

$$H [wt\%] = 100 * ( fH * 84.16 ) / ( (fB * 56.11) + (fH * 84.16) + ((1-(fB + fH)) * 28.05) )$$

References:

Klimke, K., Parkinson, M., Piel, C., Kaminsky, W., Spiess, H.W., Wilhelm, M., Macromol. Chem. Phys. 2006; 207:382.

Parkinson, M., Klimke, K., Spiess, H.W., Wilhelm, M., Macromol. Chem. Phys. 2007; 208:2128.

Pollard, M., Klimke, K., Graf, R., Spiess, H.W., Wilhelm, M., Sperber, O., Piel, C., Kaminsky, W., Macromolecules 2004; 37:813.

Filip, X., Tripon, C., Filip, C., J. Mag. Resn. 2005, 176, 239.

Griffin, J.M., Tripon, C., Samoson, A., Filip, C., and Brown, S.P., Mag. Res. in Chem. 2007 45, S1, S198.

Castignolles, P., Graf, R., Parkinson, M., Wilhelm, M., Gaborieau, M., Polymer 50 (2009) 2373.

Busico, V., Cipullo, R., Prog. Polym. Sci. 26 (2001) 443.

Busico, V., Cipullo, R., Monaco, G., Vacatello, M., Segre, A.L., Macromoleucles 30 (1997) 6251.

Zhou, Z., Kuemmerle, R., Qiu, X., Redwine, D., Cong, R., Taha, A., Baugh, D. Winniford, B., J. Mag. Reson. 187 (2007) 225.

Busico, V., Carbonniere, P., Cipullo, R., Pellecchia, R., Severn, J., Talarico, G., Macromol. Rapid Commun. 2007, 28, 1128.

Resconi, L., Cavallo, L., Fait, A., Piemontesi, F., Chem. Rev. 2000, 100, 1253.

**Molecular weights, molecular weight distribution ($M_n$, $M_w$, MWD)**

Molecular weight averages ($M_z$, $M_w$ and $M_n$), Molecular weight distribution (MWD) and its broadness, described by polydispersity index, PDI= $M_w/M_n$ (wherein $M_n$ is the number average molecular weight and $M_w$ is the weight average molecular weight) were determined by Gel Permeation Chromatography (GPC) according to ASTM D 6474-12 using the following formulas:

$$M_n = \frac{\sum_{i=1}^{N} A_i}{\sum_{i=1}^{N} (A_i / M_i)} \quad (1)$$

$$M_w = \frac{\sum_{i=1}^{N} (A_i x\, M_i)}{\sum_{i=1}^{N} A_i} \quad (2)$$

$$M_z = \frac{\sum_{i=1}^{N} (A_i\, x\, M_i^2)}{\sum_{i=1}^{N} (A_i x M_i)} \quad (3)$$

For a constant elution volume interval $\Delta V_i$, where $A_i$, and $M_i$ are the chromatographic peak slice area and polyolefin molecular weight (MW), respectively associated with the elution volume, $V_i$, where N is equal to the number of data points obtained from the chromatogram between the integration limits.

A high temperature GPC instrument, equipped with either infrared (IR) detector (IR4 or IR5 from PolymerChar (Valencia, Spain) or differential refractometer (RI) from Agilent Technologies, equipped with 3 x Agilent-PLgel Olexis and 1x Agilent-PLgel Olexis Guard columns was used. As the solvent and mobile phase 1,2,4-trichlorobenzene (TCB) stabilized with 250 mg/L 2,6-Di tert butyl-4-methyl-phenol) was used. The chromatographic system was operated at 160 °C and at a constant flow rate of 1 mL/min. 200 µL of sample solution was injected per analysis. Data collection was performed using either Agilent Cirrus software version 3.3 or PolymerChar GPC-IR control software.

The column set was calibrated using universal calibration with 19 narrow MWD polystyrene (PS) standards in the range of 0,5 kg/mol to 11 500 kg/mol. The PS standards were dissolved at room temperature over several hours. The conversion of the polystyrene peak molecular weight to polyolefin molecular weights is accomplished by using the Mark Houwink equation and the following Mark Houwink constants:

$$K_{PS} = 19 \times 10^{-3}\ mL/g,\ \alpha_{PS} = 0.655$$

$$K_{PE} = 39 \times 10^{-3}\ mL/g,\ \alpha_{PE} = 0.725$$

A third order polynomial fit was used to fit the calibration data. All samples were prepared in the concentration range of 0,5 -1 mg/ml and dissolved at 160 °C for 3 hours for PE under continuous gentle shaking.

**Determination of the chemical heterogeneity by Cross Fractionation Chromatography (CFC)**

The chemical composition distribution as well as the determination of the molecular weight distribution and the corresponded molecular weight averages (Mn, Mw and Mv) at a certain elution temperature (polymer crystallinity in solution) were determined by a full automated Cross Fractionation Chromatography (CFC) as described by Ortin A., Monrabal B., Sancho-Tello J., Macromol. Symp., 2007, 257, 13-28.

A CFC instrument (PolymerChar, Valencia, Spain) was used to perform the cross-fractionation chromatography (TREF x SEC). A four-band IR5 infrared detector (PolymerChar, Valencia, Spain) was used to monitor the concentration. Around 40 mg of the polymer sample was dissolved in 25 ml TCB in the stainless steel vessel for 150 min at 150 °C. Once the sample was completely dissolved an aliquot of 0,5 ml was loaded into the TREF column and stabilized for 60 minutes at 110 °C. The polymer was crystallized and precipitate to a temperature of 30°C by applying a constant cooling rate of 0.1 °C/min. A discontinuous elution process is performed using the following temperature steps: (35, 40, 45, 50, 53, 56, 59, 62, 64, 66, 69, 72, 76, 79, 82, 85, 89, 91, 93, 95, 97, 100, 110, and 120).

In the second dimension, the GPC analysis, 3 PL Olexis columns and 1× Olexis Guard columns from Agilent (Church Stretton, UK) were used as stationary phase. As eluent 1,2,4-trichlorobenzene (TCB, stabilized with 250 mg/L 2,6-Di tert butyl-4-methyl-phenol) at 150 °C and a constant flow rate of 1 mL/min were applied. The column set was calibrated using universal calibration (according to ISO 16014-2:2003) with at least 15 narrow MWD polystyrene (PS) standards in the range of 0,5 kg/mol to 11 500 kg/mol. Following Mark Houwink constants were used to convert PS molecular weights into the PE molecular weight equivalents.

$$K_{PS} = 19 \times 10^{-3}\ mL/g,\ \alpha_{PS} = 0.655$$

$$K_{PE} = 39 \times 10^{-3}\ mL/g,\ \alpha_{PE} = 0.725$$

A third order polynomial fit was used to fit the calibration data. Data processing was performed using the software provided from PolymerChar with the CFC instrument.

**Soluble fraction SF@35°C**

The soluble fraction@35°C is the polymer fraction eluting at 35°C

**$M_w$(Tp(LCF, $M_w$(Tp(HCF), Half peak breadth Tp(LCF), Half peak breadth Tp(HCF)**

To determine the weight average molecular weight at the peak maximum of the low crystalline fraction (Mw(Tp(LCF)), or of the high crystalline fraction (Mw(Tp(HCF)) and of the half peak breadth of Tp(LCF) and Tp(HCF) in a first step an a-TREF curve is retrieved from the CFC analysis, described above.

From the a-TREF curve the peak maximum of the high crystalline fraction (HCF) peak (Tp(HCF)) and of the low crystalline fraction (LCF) peak (Tp(LCF) are determined. The elution temperature of the Tp(HCF) is higher than Tp(LCF) and smaller than 99°C. Normally the high crystalline fraction is ranging from 90°C to 99°C and the low crystalline fraction is the polymer fraction eluting from 35 to 90°C.

The half peak breadth of both HCF and LCF are defined as the elution temperature difference between the front temperature and the rear temperature at the half of the maximum peak height of Tp(LCF) or Tp(HCF) respectively. The correspondent front temperature was searched forward from 35 °C, while the rear temperature at the half of the maximum was searched backwards from 100°C, if the peaks are not well separated. If the LCF is well separated from HCF then the rear temperature was searched after the HCF.

In the next step the Mw at the elution temperature of Tp(LCF) and Tp(HCF) were determined. Therefore the Mw at the Tp(LCF) (Mw(Tp(LCF)) was calculated by a linear interpolation between the measured Mw values by GPC of the elution temperatures which was above the Tp(LCF) and below Tp(LCF). This was achieved by using e.g. "TREND" function in Excel. The same procedure was done to determine the Mw at Tp(HCF).

From the determined Mw(Tp(LCF), Mw(Tp(HCF), the half peak breadth (LCF) and half peak bredath (HCF) and the Tp(LCF) the following parameters can be calculated straight forward :

- $M_w$(Tp(LCF)/$M_w$(Tp(HCF)
- Delta $M_w$(TP(LCF)) - $M_w$(TP(HCF) (g/mol) = $M_w$(TP(LCF) - $M_w$(TP(HCF) [g/mol]
- Half peak breadth (LCF) /(98°C- Tp(LCF)).

**B. Materials used**

**FT5236** is a low density polyethylene ($MFR_2$ (190°C/2.16kg): 0.75 g/10min, density: 923 kg/m$^3$, $T_m$ 112°C, produced by Tubular Technology) commercially available as FT5236 from Borealis AG and contains anti-block, antioxidant and slip additives.

**FX1001** is a multimodal alpha-olefin terpolymer ($MFR_5$ (190°C/5 kg): 0.9 g/10min, density: 931 kg/m$^3$, $T_m$ 127°C, produced with a Ziegler-Natta catalyst) commercially available as BorShape™ FX1001 from Borealis AG and contains antioxidant.

**Queo0201** is an unimodal ethylene based 1-octene plastomer ($MFR_2$ (190°C/2.16kg): 1.1 g/10 min, density: 902 kg/m$^3$, $T_m$ 97°C, produced in a solution polymerization process using a metallocene catalyst, C8-content: 16.1 wt.-% based on the total weight of the copolymer = 4.6 mol-%) commercially available as Queo™ 0201 from Borealis AG and contains processing stabilizers.

**Queo8201** is an unimodal ethylene based 1-octene plastomer ($MFR_2$ (190°C/2.16kg): 1.1 g/10 min, density: 883 kg/m$^3$, $T_m$ 73°C, produced in a solution polymerization process using a metallocene catalyst, C8-content: 26.3 wt.-% based on the total weight of the copolymer = 8.2 mol-%) commercially available as Queo™ 8201 from Borealis AG and contains processing stabilizers.

**MMCP** is a multimodal copolymer and was prepared as follows.

**Catalyst preparation (CAT)**

*Loading* of *SiO2:*

10 kg of silica (PQ Corporation ES757, calcined 600°C) was added from a feeding drum and inertized in a

reactor until $O_2$ level below 2 ppm was reached.

*Preparation of MAO/tol/MC:*

30 wt.-% MAO in toluene (14.1 kg) was added into another reactor from a balance followed by toluene (4.0 kg) at 25°C (oil circulation temp) and stirring 95 rpm. Stirring speed was increased 95 rpm -> 200 rpm after toluene addition, stirring time 30 minutes. Metallocene Rac-dimethylsilanediylbis{2-(5-(trimethylsilyl)furan-2-yl)-4,5-dimethylcyclopentadien-1-yl}zirconium dichloride 477 g was added from a metal cylinder followed by flushing with 4 kg toluene (total toluene amount 8.0 kg). Reactor stirring speed was changed to 95 rpm for MC feeding and returned back to 200 rpm for 3 h reaction time. After reaction time MAO/tol/MC solution was transferred into a feeding vessel.

*Preparation of catalyst:*

Reactor temperature was set to 10°C (oil circulation temp) and stirring was turned to 40 rpm during MAO/tol/MC addition. MAO/tol/MC solution (22.2 kg) was added within 205 minutes followed by 60 minutes stirring time (oil circulation temp was set to 25°C). After stirring "dry mixture" was stabilised for 12 hours at 25°C (oil circulation temp), stirring 0 rpm. Reactor was turned 20° (back and forth) and stirring was turned on 5 rpm for few rounds once an hour. After stabilisation the catalyst was dried at 60°C (oil circulation temp) for 2 hours under nitrogen flow 2 kg/h, followed by 13 hours under vacuum (same nitrogen flow with stirring 5 rpm). Dried catalyst was sampled and HC content was measured in the glove box with Sartorius Moisture Analyser, (Model MA45) using thermogravimetric method. Target HC level was < 2 % (actual 1.3 %).

**Polymerization:**

The polymerization was carried out in a Borstar pilot plant with a 3-reactor set-up (loop 1-loop 2 - GPR) and a prepolymerization loop reactor according to the conditions as given in Table 1.

**Table 1:** Polymerization conditions.

| **Prepoly reactor** | **MMCP** |
|---|---|
| Catalyst | CAT |
| Catalyst feed (g/h) | 29.9 |
| Temperature (°C) | 50 |
| Pressure (kPa) | 5614 |
| C2 (kg/h) | 4.0 |
| H2 (g/h) | 0.03 |
| C4 (g/h) | 93.1 |
| Split (wt.-%) | 3.6 |
| **loop 1 Fraction (A-1)** | |
| Temperature (°C) | 85 |
| Pressure (kPa) | 5536 |
| C2 conc. (mol-%) | 4.3 |
| H2/C2 ratio (mol/kmol) | 1.34 |
| C4/C2 ratio (mol/kmol) | 88.0 |
| Split (wt.-%) | 18.2 |
| Density (kg/$m^3$) of loop 1 material (fraction (A-1)) | 938.3 |
| $MFR_2$ (g/10 min) of loop 1 material (fraction (A-1)) | 120.0 |
| **loop 2** | |
| Temperature (°C) | 85 |

(continued)

| **loop 2** | |
|---|---|
| Pressure (kPa) | 5350 |
| C2 conc. (mol-%) | 4.3 |
| H2/C2 ratio (mol/kmol) | 0.85 |
| C4/C2 ratio (mol/kmol) | 62.1 |
| Split (wt.-%) | 20.2 |
| Density (kg/m$^3$) after loop 2 (component (A)) | 941.3 |
| $MFR_2$ (g/10 min) after loop 2 (component (A)) | 122 |
| $MFR_2$ (g/10 min) of loop 2 material (fraction (A-2)) | 124.2 |
| Density (kg/m$^3$) of loop 2 material (fraction (A-2)) | 944.5 |
| C4 (mol-%.-%) after loop 2 material (Component (A)) | 1.43 |
| **GPR** | |
| Temperature (°C) | 75 |
| Pressure (kPa) | 2000 |
| H2/C2 ratio (mol/kmol) | 0.77 |
| C6/C2 ratio (mol/kmol) | 10.06 |
| Split (wt.-%) | 58.1 |
| $MFR_2$ (g/10 min) of GPR material (Component (B)) | 0.01 |
| Density (kg/m$^3$) of GPR material (Component (B)) | 898.9 |
| C6 (mol-%) of GPR material (Component (B)) | 4.99 |

The polymer (**MMCP**) was mixed with 2400 ppm of Irganox B561 (commercially available from BASF SE) 270 ppm of Dynamar FX 5922 (commercially available from 3 M) compounded and extruded under nitrogen atmosphere to pellets by using a JSW extruder so that the SEI was 230 kWh/kg and the melt temperature 250°C. Table 2 summarizes some properties of **MMCP**.

**Table 2:** Properties of the multimodal copolymer.

| Properties | Unit | **MMCP** |
|---|---|---|
| $MFR_2$ | g/10 min | 0.63 |
| $MFR_{21}$ | g/10 min | 28.5 |
| $MFR_{21}/MFR_2$ | - | 43.8 |
| Density | kg/m$^3$ | 916.7 |
| C4 | mol-% | 0.6 |
| C6 | mol-% | 2.9 |
| C4 | wt.-% | 1.2 |
| C6 | wt.-% | 8.2 |
| $M_n$ | g/mol | 16000 |
| $M_w$ | g/mol | 103000 |
| Mw/Mn | - | 6.5 |
| Tp (LCF) | °C | 54.5 |
| Half peak breadth (LCF) | °C | 12.7 |

(continued)

| Properties | Unit | **MMCP** |
|---|---|---|
| Mw(Tp(LCF)/Mw(Tp(HCF)* | - | 4.96 |
| Delta Mw(TP(LCF)) - Mw(TP(HCF)* | g/mol | 136000 |
| Half peak breadth (LCF)/ (98 -Tp(LCF)* | - | 0.29 |
| SF@35°C/density$_P$ | - | 0.003 |
| SF@35°C | wt.-% | 2.85 |

**C. Manufacturing of 3-layered films**

3-layered films having the composition shown in Table 3 with a total thickness of 60 μm were produced on a Collin 3 layer lab line (melt temperature: 210°C, BUR 1:2.5, uptake speed: 7 m/min).

**D. Results**

**Table 3:** Composition and properties of 3-layered films.

| | | **IE1** | **IE2** | **CE1** | **CE2** |
|---|---|---|---|---|---|
| Skin layer (12 μm) | MMCP (wt.-%) | 18 | 18 | 18 | 18 |
| | FT5236 (wt.-%) | 2 | 2 | 2 | 2 |
| Core layer (36 μm) | FX1001 (wt.-%) | 48 | 48 | 48 | 48 |
| | MMCP (wt.-%) | 12 | 12 | 12 | 12 |
| Sealing layer (12 μm) | MMCP (wt.-%) | 14 | 6 | 20 | 6 |
| | Queo0201 (wt.-%) | - | - | - | 14 |
| | Queo8201 (wt.-%) | 6 | 14 | - | - |
| **Properties of 3-layered films** | | | | | |
| TM (MD) | MPa | 276 | 285 | 303 | 324 |
| TM (TD) | MPa | 331 | 315 | 375 | 385 |
| DDI | g | 1165 | 1542 | 1206 | 536 |
| Haze | % | 12.4 | 10.6 | 12.7 | 10.7 |
| SIT | °C | 71 | 58 | 91 | 75 |
| HTF | N | 6.13 | 7.34 | 4.44 | 5.35 |
| HTT | °C | 86 | 71 | 104 | 90 |
| *wt.-% based on the weight of the total film.* | | | | | |

**E. Discussion of the results**

All produced 3-layered films have the same skin and core layer. The sealing layer of the films according to the present invention (**IE1 and IE2**) contain a blend of a specific metallocene-catalysed multimodal polyethylene copolymer (**MMCP**) and a specific plastomer, whereas the sealing layer of the films according to the comparative examples (**CE1** and **CE2**) comprise a blend of the same metallocene-catalysed multimodal polyethylene copolymer (MMCP) and a different plastomer or only the **MMCP**. The use of a different plastomer (**CE2**) gives a film with significantly worsened toughness. Moreover, the use of the specific plastomer in accordance with the present invention allows to obtain films with improved sealing properties.

## Claims

1. A multilayered film comprising a skin layer (SKL), a core layer (CL) and a sealing layer (SL); wherein the sealing layer (SL) comprises

   (a) 15 to 85 wt.-% based on the total weight of the sealing layer (SL) of a metallocene-catalysed multimodal polyethylene copolymer (MMCP), which consists of

   (i) 35.0 to 50.0 wt.-% based on the total weight of MMCP of an ethylene-1-butene polymer component (A); and
   (ii) 50.0 to 65.0 wt.-% based on the total weight of MMCP of an ethylene-1-hexene polymer component (B); wherein

   the ethylene-1-butene polymer component (A) has

   • a density (ASTM D792) in the range of 920 to 960 kg/$m^3$;
   • a $MFR_2$ (190°C, 2.16 kg, ISO 1133) in the range of 3.0 to 300.0 g/10 min;
   • a 1-butene content in the range of 0.1 to 3.0 mol-%, based on the ethylene-1-butene polymer component (A); and

   the ethylene-1-hexene polymer component (B) has

   • a density (ASTM D792) in the range of 880 to 920 kg/$m^3$;
   • a $MFR_2$ (190°C, 2.16 kg, ISO 1133) in the range of 0.001 to 1.0 g/10 min;
   • a 1-hexene content in the range of 2.5 to 10.0 mol-% based on the ethylene-1-hexene polymer compound (B); and

   the metallocene-catalysed multimodal polyethylene copolymer (MMCP) has

   • a density (ASTM D792) in the range of 910 to 930 kg/$m^3$;
   • a $MFR_2$ (190°C, 2.16 kg, ISO 1133) in the range of 0.1 to 2.0 g/10 min; and
   • a ratio of the $MFR_{21}$ (190°C, 21.6 kg, ISO 1133) to $MFR_2$ (190°C, 2.16 kg, ISO 1133), $MFR_{21}/MFR_2$, in the range of 22 to 70; and

   (b) 15 to 85 wt.-% based on the total weight of the sealing layer (SL) of a plastomer being a copolymer of ethylene and a C3-C8 alpha-olefin; having

   • a density (ASTM D792) in the range of 870 to 900 kg/$m^3$;
   • a $MFR_2$ (190°C, 2.16 kg, ISO 1133) in the range of 0.1 to 10.0 g/10 min; and
   • a melting point (measured by DSC as described in the description) in the range of 65 to 80°C; and;

   wherein the weight proportions of components (a) and (b) add up to 100 wt.-%.

2. The multilayered film according to claim 1, **characterized in that**,
   the plastomer (b) is a copolymer of ethylene and 1-octene and has one or more of the following properties:

   • 1-octene content in the range of 18 to 45 wt.-% and preferably in the range of 20 to 30 wt.-% based on the total weight of the copolymer; and/or
   • a density (ASTM D792) in the range of 870 to 890 kg/$m^3$ and preferably in the range of 880 to 886 kg/$m^3$;and/or
   • a $MFR_2$ (190°C, 2.16 kg, ISO 1133) in the range of 0.1 to 5.0 g/10 min and preferably in the range of 0.5 to 1.5; and/or
   • a melting point (measured by DSC as described in the description) in the range of 68 to 77°C and preferably in the range of 71 to 75°C.

3. The multilayered film according to claim 1 or 2, **characterized in that**,
   the metallocene-catalysed multimodal polyethylene copolymer (MMCP) has a ratio of the soluble fraction at 35°C determined with crossfractionation chromatography (CFC) as described in the experimental part to the density of the MMCP, SF@35°C/$density_{MMCP}$ of below 0.007, wherein the amount of the soluble fraction at 35°C is in the range of 0.5 to 6.0 wt.-%, based on the total weight of the MMCP.

**4.** The multilayered film according to any one of the preceding claims, **characterized in that**, the metallocene-catalysed multimodal polyethylene copolymer (MMCP) has

• a ratio of the molecular weight ($M_w$) of the low crystalline fraction (LCF) to the molecular weight ($M_w$) of the high crystalline fraction (HCF), $M_w$(Tp(LCF)/$M_w$(Tp(HCF), determined as described in the experimental part, in the range of > 1.3 to 10.0, and/or
• a ratio of the breadth at Half peak height (LCF)/ (98 - Tp(LCF)) in the range of of 0.10 to 1.50, and/or
• a delta of Mw(LCF) - Mw(HCF) of at least 31000 up to 200000 g/mol.

**5.** The multilayered film according to any one of the preceding claims, **characterized in that**,

the ethylene-1-butene polymer component (A) of the metallocene-catalysed multimodal polyethylene copolymer (MMCP) (a) consists of an ethylene polymer fraction (A-1) and an ethylene polymer fraction (A-2); wherein
the ethylene polymer fraction (A-1) preferably has
a density (ASTM D792) in the range of 925 to 960 kg/$m^3$, preferably of 925 to 955 kg/$m^3$ and more preferably of 930 to 950 kg/$m^3$; and/or
a $MFR_2$ (190°C, 2.16 kg, ISO 1133) in the range of 3.0 to 300.0 g/10 min, preferably of 100 to 150 and more preferably of 115 to 125 g/10 min, and/or
the ethylene polymer fraction (A-2) preferably has
a density (ASTM D792) in the range of 925 to 960 kg/$m^3$, preferably of 925 to 955 kg/$m^3$ and more preferably of 930 to 950 kg/$m^3$, and/or
a $MFR_2$ (190°C, 2.16 kg, ISO 1133) in the range of 3.0 to 300.0 g/10 min, preferably of 100 to 150 and more preferably of 115 to 125 g/10 min.

**6.** The multilayered film according to any one of the preceding claims, **characterized in that**

the metallocene-catalysed multimodal copolymer (MMCP) (a) has
a total amount of 1-butene, based on the multimodal polymer (MMCP) is in the range of 0.1 to 1.0 mol-%, preferably of 0.2 to 0.8 mol-% and more preferably of 0.3 to 0.7 mol%; and/or
a total amount of 1-hexene, based on the multimodal polymer (MMCP) is in the range of 1.5 to 8.0 mol-%, preferably of 2.0 to 6.0 mol-% and more preferably of 2.2 to 4.0 mol-%; and/or
a content of the ethylene-1-butene polymer component (A) of 35 to 50 wt.-% based on the total weight of MMCP, preferably of 36 to 48 wt.-% and more preferably of 38 to 45 wt.-%; and/or
a content of the ethylene-1-hexene polymer component (B) of 50 to 65 wt.-% based on the total weight of MMCP, preferably of 52 to 64 wt.-% and more preferably of 55 to 62 wt.-%.

**7.** The multilayered film according to any one of the preceding claims, **characterized in that**

the metallocene-catalysed multimodal copolymer (MMCP) (a) is produced in the presence of a metallocene complex of formula (I):

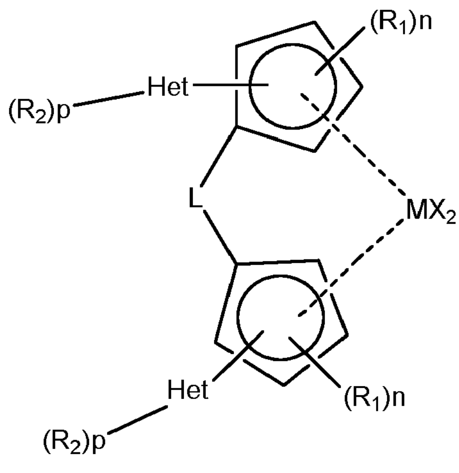

(I)

wherein each X is independently a halogen atom, a $C_{1-6}$-alkyl group, $C_{1-6}$-alkoxy group, phenyl or benzyl group;

each Het is independently a monocyclic heteroaromatic group containing at least one heteroatom selected from O or S;
L is $-R'_2Si-$, wherein each R' is independently $C_{1-20}$-hydrocarbyl or $C_{1-10}$-alkyl substituted with alkoxy having 1 to 10 carbon atoms;
M is Ti, Zr or Hf;
each $R^1$ is the same or different and is a $C_{1-6}$-alkyl group or $C_{1-6}$-alkoxy group;
each n is 1 to 2;
each $R^2$ is the same or different and is a $C_{1-6}$-alkyl group, $C_{1-6}$-alkoxy group or $-Si(R)_3$ group;
each R is $C_{1-10}$-alkyl or phenyl group optionally substituted by 1 to 3 $C_{1-6}$-alkyl groups; and
each p is 0 to 1.

**8.** The multilayered film according to any one of the preceding claims, **characterized in that**,

the skin layer (SKL) of the multilayered film has a thickness in the range of 1 to 100 μm, preferably in the range of 5 to 80 μm and more preferably in the range of 10 to 15 μm; and/or
the core layer (CL) of the multilayered film has a thickness in the range of 10 to 200 μm, preferably in the range of 20 to 80 μm and more preferably in the range of 30 to 45 μm; and/or
the sealing layer (SL) of the multilayered film has a thickness in the range of 1 to 50 μm, preferably in the range of 5 to 25 μm and more preferably in the range of 10 to 15 μm; and/or
the multilayered film has a thickness in the range of 12 to 350 μm, preferably in the range of 40 to 150 μm and more preferably in the range of 50 to 70 μm.

**9.** The multilayered film according to any one of the preceding claims, **characterized in that**,

the multilayered film consists of the skin layer (SKL), the core layer (CL) and the sealing layer(SL); and/or
the skin layer (SKL) comprises

80 to 95 wt.-%, more preferably 82 to 93 wt.-% and still more preferably 88 to 92 wt.-% based on the total weight of the skin layer (SKL) of the metallocene-catalysed multimodal polyethylene copolymer (MMCP); and
5 to 20 wt.-%, preferably 7 to 18 wt.-%, more preferably 8 to 12 wt.-% based on the total weight of the skin layer (SKL) of a LDPE having a density (ASTM D792) in the range of 910 to 930 kg/$m^3$, preferably of 920 to 925 kg/$m^3$ and a $MFR_2$ (190°C, 2.16 kg, ISO 1133) in the range of 0.5 to 4.0 g/10 min and preferably of 0.5 to 1.0 g/10 min.

**10.** The multilayered film according to any one of the preceding claims, **characterized in that**,

the multilayered film consists of the skin layer (SKL), the core layer (CL) and the sealing layer(SL); and/or
the core layer (CL) comprises

10 to 35 wt.-%, more preferably 15 to 30 wt.-% and still more preferably 18 to 25 wt.-% based on the total weight of the core layer (CL) of the metallocene-catalysed multimodal polyethylene copolymer (MMCP); and
65 to 90 wt.-%, more preferably 70 to 85 wt.-% and still more preferably 75 to 82 wt.-% based on the total weight of the core layer (CL) of a Ziegler-Natta catalysed linear low density polyethylene being preferably a multimodal alpha-olefin terpolymer, preferably having a density (ASTM D792) in the range of 920 to 970 kg/$m^3$ and more preferably of 930 to 938 kg/$m^3$ and a $MFR_5$ (190°C, 2.16 kg, ISO 1133) in the range of 0.1 to 2.5 g/10 min and preferably of 0.5 to 1.2 g/10 min.

**11.** The multilayered film according to any one of the preceding claims, **characterized in that**, the skin layer (SKL), the core layer (CL) and the sealing layer (SL) comprise the metallocene-catalysed multimodal polyethylene copolymer (MMCP) and preferably said multilayered film consists of polyethylene-based polymers.

**12.** The multilayered film according to any one of the preceding claims, **characterized in that**,

the content of MMCP (a) in the sealing layer (SL) based on the total weight of said layer is in the range of 20 to 40 wt.-% or 60 to 80 wt.-%, preferably in the range of 25 to 35 wt.-% or 65 to 75 wt.-% and more preferably in the range of 28 to 32 wt.-% or 68 to 72 wt.-%; and/or
the content of plastomer (b) in the sealing layer (SL) based on the total weight of said layer is in the range of 20 to 40 wt.-% or 60 to 80 wt.-%, preferably in the range of 25 to 35 wt.-% or 65 to 75 wt.-% and more preferably

in the range of 28 to 32 wt.-% or 68 to 72 wt.-%.

**13.** The multilayered film according to any one of the preceding claims, **characterized in that** said multilayered film has

- a Tensile Modulus in MD (ISO 527-3) in the range of 150 to 300 MPa, preferably in the range of 250 to 290 MPa; and/or
- a Tensile Modulus in TD (ISO 527-3) in the range of 150 to 400 MPa, preferably in the range of 300 to 350 MPa; and/or
- a Dart Drop Strength (ISO 7765-1) in the range of 500 to 2000 g, preferably in the range of 1100 to 1700 g and more preferably in the range of 1500 to 1600 g and more preferably in the range of 1500 to 1550.

**14.** The multilayered film according to any one of the preceding claims, **characterized in that** said multilayered film has

- a Haze (ASTM D1003-00) in the range of 5 to 15 %, preferably in the range of 10 to 13 %; and/or
- a Sealing Initiation Temperature determined as described in the specification in the range of 50 to 85°C, preferably in the range of 55 to 73°C and more preferably in the range of 56 to 72°C; and/or
- a Hot Tack Force determined as described in the specification in the range of 4 to 12 N, preferably in the range of 5 to 8 N; and/or
- a Hot Tack Temperature determined as described in the specification in the range of 60 to 90°C, preferably in the range of 65 to 88°C.

**15.** Use of the multilayered film according to any of the preceding claims as packing material, preferably for food and/or medical products.

Europäisches Patentamt
European Patent Office
Office européen des brevets

# EUROPEAN SEARCH REPORT

Application Number
EP 22 16 2461

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X<br><br>Y | WO 2020/245425 A1 (BOREALIS AG [AT])<br>10 December 2020 (2020-12-10)<br>* abstract; claims 1-19 *<br>* page 17; table 1 *<br>* pages 5-9 *<br>* pages 9,10 *<br>----- | 1-15<br><br>1-15 | INV.<br>B32B27/08<br>B32B27/30<br>B32B27/32<br>C08J5/18 |
| X | WO 2022/034168 A1 (BOREALIS AG [AT])<br>17 February 2022 (2022-02-17)<br>* abstract; claims 1-15 *<br>* pages 4-9 *<br>* page 11 *<br>* pages 21,22; table 1 *<br>----- | 1-15 | |
| Y | EP 2 875 948 A1 (BOREALIS AG [AT])<br>27 May 2015 (2015-05-27)<br>* abstract; claims 1-15 *<br>* paragraphs [0088], [0092], [0097] *<br>* paragraph [0112] *<br>----- | 1-15 | |
| A | WO 2017/055174 A1 (BOREALIS AG [AT])<br>6 April 2017 (2017-04-06)<br>* abstract; claims 1-16 *<br>----- | 1-15 | TECHNICAL FIELDS SEARCHED (IPC)<br>B32B<br>C08J |
| A | WO 2022/018239 A1 (BOREALIS AG [AT])<br>27 January 2022 (2022-01-27)<br>* abstract; claims 1-15 *<br>* page 23 *<br>----- | 1-15 | |
| A | WO 2015/158791 A2 (BOREALIS AG [AT])<br>22 October 2015 (2015-10-22)<br>* the whole document *<br>----- | 1-15 | |

The present search report has been drawn up for all claims

1

| Place of search | Date of completion of the search | Examiner |
|---|---|---|
| The Hague | 13 July 2022 | Bergmans, Koen |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

# ANNEX TO THE EUROPEAN SEARCH REPORT ON EUROPEAN PATENT APPLICATION NO.

EP 22 16 2461

This annex lists the patent family members relating to the patent documents cited in the above-mentioned European search report.
The members are as contained in the European Patent Office EDP file on
The European Patent Office is in no way liable for these particulars which are merely given for the purpose of information.

13-07-2022

| Patent document cited in search report | Publication date | Patent family member(s) | Publication date |
| --- | --- | --- | --- |
| WO 2020245425 A1 | 10-12-2020 | EP 3980264 A1 | 13-04-2022 |
| | | EP 3980265 A1 | 13-04-2022 |
| | | TW 202110647 A | 16-03-2021 |
| | | TW 202110648 A | 16-03-2021 |
| | | WO 2020245425 A1 | 10-12-2020 |
| | | WO 2020245429 A1 | 10-12-2020 |
| WO 2022034168 A1 | 17-02-2022 | NONE | |
| EP 2875948 A1 | 27-05-2015 | CN 105980152 A | 28-09-2016 |
| | | EP 2875948 A1 | 27-05-2015 |
| | | ES 2598302 T3 | 26-01-2017 |
| | | US 2016271917 A1 | 22-09-2016 |
| | | WO 2015075081 A1 | 28-05-2015 |
| WO 2017055174 A1 | 06-04-2017 | EP 3356141 A1 | 08-08-2018 |
| | | WO 2017055174 A1 | 06-04-2017 |
| WO 2022018239 A1 | 27-01-2022 | NONE | |
| WO 2015158791 A2 | 22-10-2015 | EP 2933277 A1 | 21-10-2015 |
| | | EP 3131935 A2 | 22-02-2017 |
| | | TW 201609841 A | 16-03-2016 |
| | | US 2017037164 A1 | 09-02-2017 |
| | | WO 2015158791 A2 | 22-10-2015 |

EPO FORM P0459

For more details about this annex : see Official Journal of the European Patent Office, No. 12/82

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- EP 0575465 A1
- WO 2012061168 A1
- US 20210324185 A1
- WO 2021204799 A1
- WO 2016198273 A1
- WO 2021009189 A1
- WO 2021009190 A1
- WO 2021009191 A1
- WO 2021009192 A1

### Non-patent literature cited in the description


- **KLIMKE, K. ; PARKINSON, M. ; PIEL, C. ; KAMINSKY, W. ; SPIESS, H.W. ; WILHELM, M.** *Macromol. Chem. Phys.,* 2006, vol. 207, 382
- **PARKINSON, M. ; KLIMKE, K. ; SPIESS, H.W. ; WILHELM, M.** *Macromol. Chem. Phys.,* 2007, vol. 208, 2128
- **POLLARD, M. ; KLIMKE, K. ; GRAF, R. ; SPIESS, H.W. ; WILHELM, M. ; SPERBER, O. ; PIEL, C. ; KAMINSKY, W.** *Macromolecules,* 2004, vol. 37, 813
- **FILIP, X. ; TRIPON, C. ; FILIP, C.** *J. Mag. Resn.,* 2005, vol. 176, 239
- **GRIFFIN, J.M. ; TRIPON, C. ; SAMOSON, A. ; FILIP, C. ; BROWN, S.P.** *Mag. Res. in Chem.,* 2007, vol. 45, S1, , S198
- **CASTIGNOLLES, P. ; GRAF, R. ; PARKINSON, M. ; WILHELM, M. ; GABORIEAU, M.** *Polymer,* 2009, vol. 50, 2373
- **BUSICO, V. ; CIPULLO, R.** *Prog. Polym. Sci.,* 2001, vol. 26, 443
- **BUSICO, V. ; CIPULLO, R. ; MONACO, G. ; VACATELLO, M. ; SEGRE, A.L.** *Macromoleucles,* 1997, vol. 30, 6251
- **ZHOU, Z. ; KUEMMERLE, R. ; QIU, X. ; REDWINE, D. ; CONG, R. ; TAHA, A. ; BAUGH, D. ; WINNIFORD, B.** *J. Mag. Reson.,* 2007, vol. 187, 225
- **BUSICO, V. ; CARBONNIERE, P. ; CIPULLO, R. ; PELLECCHIA, R. ; SEVERN, J. ; TALARICO, G.** *Macromol. Rapid Commun.,* 2007, vol. 28, 1128
- **RESCONI, L. ; CAVALLO, L. ; FAIT, A. ; PIEMONTESI, F.** *Chem. Rev.,* 2000, vol. 100, 1253
- **ORTIN A. ; MONRABAL B. ; SANCHO-TELLO J.** *Macromol. Symp.,* 2007, vol. 257, 13-28